# EUROPÄISCHE PATENTSCHRIFT

(11) **EP 3 836 370 B1**
(45) Veröffentlichungstag und Bekanntmachung des Hinweises auf die Patenterteilung: **05.01.2022**
(21) Anmeldenummer: 20210903.9
(22) Anmeldetag: 01.12.2020
(51) Int. Cl.: H02K 15/04

(54) **VORRICHTUNG ZUM FORMEN VON SCHEITELN BEI HAIRPINS**
DEVICE FOR FORMING HAIRPIN CONDUCTOR HEADS
DISPOSITIF DE FORMATION DES TÊTES DE CONDUCTEUR D'ÉPINGLE À CHEVEUX

(30) Priorität: 13.12.2019 DE 102019219587
(43) Veröffentlichungstag der Anmeldung: 16.06.2021
(73) Patentinhaber: Otto Bihler Handels-Beteiligungs-GmbH, 87642 Halblech (DE)
(72) Erfinder: KUCK, Roland, 87629 Füssen (DE)
(74) Vertreter: Weickmann & Weickmann PartmbB

(56) Entgegenhaltungen:
- DE-T5-112014 006 245
- JP-A- 2012 239 371
- JP-A- 2014 135 857
- US-A1- 2019 109 524

## Beschreibung

Die vorliegende Erfindung betrifft eine Maschine zum Herstellen von gebogenen Drahtbauteilen, sowie ein Verfahren zum Herstellen derartiger Bauteile mittels der genannten Maschine.

Ein Beispiel für gebogene Drahtbauteile der angesprochenen Art sind sogenannte "Hairpin"-Elemente, die zwei im Wesentlichen in einer Ebene verlaufende Schenkel aufweisen, deren Scheitel außerhalb der Schenkelebene liegt. Diese Drahtbauteile werden beispielsweise bei der Herstellung von Statoreinheiten für Elektromotoren und Generatoren verwendet, wobei aufgrund der zunehmenden Elektrifizierung des Kraftverkehrs zu erwarten ist, dass sich der Markt für derartige Statoreinheiten und somit auch für die genannten Drahtelemente in Zukunft stark vergrößern wird.

Da gerade bei derartigen Anwendungen hohe Ströme durch die Drahtbauteile geleitet werden, ist es zur Verhinderung von lokal erhöhten elektrischen Widerständen und zur optimalen Feldformung notwendig, die gewünschte Geometrie der Drahtbauteile mit einer niedrigen Toleranz sicherzustellen und die Bauteilqualität in höchstem Maße einzuhalten. Ferner sind für eine optimale Bildung eines Statorfelds in den genannten Statoreinheiten Drahtelemente vorzusehen, die sich in ihren Abmessungen und geometrischen Formen zwar ähneln, jedoch nicht vollkommen identisch sind. Vielmehr ist es in der Regel so, dass für den Bau einer der genannten Statoreinheiten mehrere Typen von Drahtelementen benötigt werden, die ihrerseits in der fertig hergestellten Statoreinheit in unterschiedlicher Anzahl vorliegen und sich beispielsweise in ihren Außenabmessungen leicht unterscheiden, aber von ähnlicher Form sind.

In bisher bekannten Herstellungsverfahren derartiger Drahtbauteile wurden in einer Ebene vorgebogene Biegeteile aus Flachdraht, beispielsweise im Rahmen einer Stanz-Biegemaschine, in ein Biegegesenk eingelegt und dort durch die Ausübung einer Kraft über das Biegegesenk gebogen. Hierdurch wurde an den Biegeteilen eine Rundung geformt, die durch Bildung eines Scheitels die Ebene der Drahtenden verlässt, wobei hierbei die Drahtenden in einander entgegengesetzte Richtungen oder in die gleiche Richtung weisen konnten.

Es zeigt sich hierbei jedoch, dass da der Winkel der Schenkel der Flachdrähte in Längsrichtung zueinander und die Höhe des Scheitels von der Geometrie des Biegegesenks und der Rückfederung des Drahts abhängig ist, Korrekturen an der gewünschten Geometrie der gebogenen Drahtbauteile eine Änderung der Gesenkgeometrie erfordern, was ein aufwendiges Rüsten der Maschine erfordert und somit zu verlängerten Standzeiten und höheren Kosten führt.

Ferner sei auf die Druckschrift US 2019 / 109 524 A1 verwiesen, welche eine gattungsgemäße Maschine lehrt.

Es ist somit die Aufgabe der vorliegenden Erfindung, eine Maschine zum Herstellen von gebogenen Drahtbauteilen weiterzubilden, in der vorgegebene Drahtgeometrien quer zur Richtung der Drahtenden geformt werden und Parameter der Drahtbauteile, wie beispielsweise der Abstand und die Parallelität in Längsrichtung sowie der Winkel in Querrichtung der Drahtenden, niedrige Toleranzen einhalten sollen, wobei die Maschine ferner eine höhere Flexibilität und somit geringere Standzeiten aufweisen soll.

Hierzu umfasst die erfindungsgemäße Maschine zum Herstellen von gebogenen Drahtbauteilen eine Zufuhrvorrichtung zum Zuführen von ebenen vorgebogenen Drahtelementen mit zwei sich in einer Ebene erstreckenden Schenkeln und einem zwischen den Schenkeln vorgesehenen Zwischenabschnitt, ein Biegegesenk, welches dazu ausgebildet und eingerichtet ist, den Zwischenabschnitt der Drahtelemente wenigstens abschnittweise aus der Ebene ihrer beiden Schenkel heraus zu biegen, ein Paar von beiderseits des Biegegesenks angeordneten Klemmen, welche dazu eingerichtet sind, die Drahtelemente zu greifen, und welche in koordinierter Weise translatorisch und/oder rotatorisch bewegbar sind, und eine Steuereinheit, welche mit dem Biegegesenk und dem Paar von Klemmen betriebsmäßig gekoppelt und dazu eingerichtet ist, das Biegegesenk und das Paar von Klemmen zu einem koordinierten Biegen und Bewegen anzusteuern.

Demzufolge wird erfindungsgemäß der Biegebereich in der eben beschriebenen Maschine in drei Zonen aufgeteilt, wobei lediglich der mittlere Bereich in einem Gesenk geformt wird, während außerhalb des Gesenks der Draht jeweils von einer der beiden Klemmen gegriffen und während der Verformung im Gesenk durch die translatorische und/oder rotatorische Bewegung der Klemmen mitgeführt wird. Durch die gesteuerte und koordinierte Bewegung der Klemmen bezüglich des Biegevorgangs des Biegegesenks kann der Winkel und der Abstand der Drahtenden während und nach dem Formungsprozess durch das Gesenk beeinflusst werden. Hierdurch kann folglich einerseits sowohl der gesamte Biegevorgang in einer präziseren Weise vorgenommen werden, während andererseits das zusätzliche Vorsehen der beiden Klemmen außerhalb des Biegegesenks bereits ebenfalls die Anpassung der Geometrie der fertig hergestellten Drahtbauteile in gewissen Grenzen ermöglicht.

Erfindungsgemäß sind die Klemmen insbesondere um Schwenkachsen schwenkbar gelagert, welche im Wesentlichen in der Ebene der zugeführten und gegriffenen Drahtelemente verlaufen, wobei die Klemmen jeweils von der Steuereinheit zum Ausführen einer Schwenkbewegung mittels geeigneter Aktuatoren ansteuerbar sind.

Alternativ oder zusätzlich können die Klemmen des Paars von Klemmen jedoch auch relativ zueinander innerhalb der Ebene der zugeführten und gegriffenen Drahtelemente translatorisch verlagerbar gehaltert sein und/oder in koordinierter Weise unter einem Winkel bezüglich der Ebene der zugeführten und gegriffenen Drahtelemente translatorisch verlagerbar gehaltert sein, vorzugsweise unter einem rechten Winkel. Auch hierbei versteht sich, dass die jeweiligen translatorischen Bewegungen der Klemmen ebenfalls von der Steuereinheit in einer geeigneten Weise angesteuert werden können. Auf diese Weise werden mehrere Freiheitsgrade für die Bewegbarkeit des Paars von Klemmen geschaffen, durch die sowohl eine präzise Fertigung der Drahtbauteile als auch eine Flexibilität hinsichtlich ihrer Form geschaffen wird.

Um die Flexibilität der möglichen Formgebung der gebogenen Drahtbauteile weiter zu erhöhen, kann eine erste Gesenkhälfte des Biegegesenks in einer Mehrzahl vorliegen, von welcher Mehrzahl jeweils eine erste Gesenkhälfte selektiv an eine Betriebsposition zwischen das Paar von Klemmen bewegbar ist, während die zweite Gesenkhälfte in ihrer Betriebsposition verbleibt. Indem auf diese Weise durch den Austausch jeweils einer ersten Gesenkhälfte das Innenprofil des Biegegesenks angepasst wird, kann ebenfalls die Form der herzustellenden Drahtbauteile insbesondere im Bereich ihres Scheitels variiert werden. Bei bestimmten Drahtgeometrien kann es notwendig sein, beide Gesenkhälften auszutauschen. In dieser Variante wäre dann auch eine Mehrzahl von zweiten Gesenkhälften vorzusehen, die paarweise mit einer ersten Gesenkhälfte ausgetauscht werden.

In einer besonders effizient zu betreibenden Ausführungsform kann die Mehrzahl von ersten Gesenkhälften auf einer Trommel angeordnet sein, welche derart rotierbar ist, dass jeweils eine erste Gesenkhälfte aus der Mehrzahl von ersten Gesenkhälften an die Betriebsposition überführbar ist. Durch diese Maßnahme muss zum Austausch zwischen zwei der ersten Gesenkhälften lediglich die Trommel um einen bestimmten Winkelbetrag rotiert werden, bis sich die gewünschte Gesenkhälfte sich an ihrer vorgesehenen Winkelposition und damit der Betriebsposition befindet. Der gleiche Vorgang wäre bei der eben angesprochenen Variante auch für die zweite Gesenkhälfte vorzusehen.

Alternativ zum Vorsehen einer Mehrzahl von ersten Gesenkhälften des Biegegesenks kann auch eine Mehrzahl von Gesenken an sich vorgesehen sein, welche selektiv translatorisch in eine Betriebsposition zwischen das Paar von Klemmen verlagerbar sind. Auf diese Weise kann ebenfalls das Innenprofil des Biegegesenks für eine gewünschte Scheitelgeometrie der herzustellenden Drahtbauteile gewählt werden, hierbei mit einer sogar noch größeren Flexibilität als beim Austausch von lediglich einer der beiden Gesenkhälften.

In einer solchen Ausführungsform kann insbesondere ein Magazin von Biegegesenken vorgesehen sein, welches die Mehrzahl von Biegegesenken in einer Weise angeordnet aufweist, dass ein Übergang zwischen den einzelnen Biegegesenken durch eine translatorische Verlagerung des Magazins beispielsweise in der Ebene der zugeführten und gegriffenen Drahtelemente erfolgt. Somit kann durch ein einfaches Vor- und Zurückbewegen des Magazins jeweils das gewünschte Biegegesenk an die Arbeitsposition zwischen die beiden Klemmen verlagert werden, was erneut eine Maßnahme zur Reduzierung von Standzeiten und zur Erhöhung der Effizienz der erfindungsgemäßen Maschine ist.

Wenngleich die Steuereinheit in der erfindungsgemäßen Maschine im Wesentlichen in beliebiger Weise ausgebildet sein kann und beispielsweise auch mit einer Steuereinheit einer übergeordneten Anlage betriebsmäßig verbunden oder in ihr integriert sein kann, so kann der Steuereinheit insbesondere eine Speichereinheit zugeordnet sein, in welcher Betriebsparameter zum Herstellen von Drahtbauteilen unterschiedlicher Geometrie hinterlegt sind. Indem auf diese Weise beispielsweise die Steuereinheit durch einen Mikro-Controller mit einem zugeordneten Speicher oder durch einen Multifunktions-Computer gebildet ist, kann durch ein einfaches vorheriges Speichern von geeigneten Parametersätzen eine Vielzahl unterschiedlicher Drahtbauteile mittels der erfindungsgemäßen Maschine hergestellt werden, indem die Steuereinheit die hierzu benötigten Komponenten der Maschine für einen Betrieb in geeigneter koordinierter Weise anweist.

Hierbei kann die Bewegung des Biegegesenks und/oder der Klemmen, ggf. mitsamt ihrer Halterungen, durch wenigstens einen von der Steuereinheit angesteuerten Linearaktuator hervorgerufen werden, beispielsweise einen hydraulischen oder einen elektromechanischen Linearaktuator, wobei die Maschine insbesondere in einer Formfolge-Anlage oder einer Stanz-Biegeanlage integriert sein kann.

Weiterhin betrifft die vorliegende Erfindung ein Verfahren zum Herstellen von gebogenen Drahtbauteilen mittels einer erfindungsgemäßen Maschine, umfassend die Schritte eines Zuführens eines ebenen vorgebogenen Drahtelements mit zwei sich in einer Ebene erstreckenden Schenkeln und einem zwischen den Schenkeln vorgesehenen Zwischenabschnitt, eines Greifens des Drahtelements mittels der beiden Klemmen und eines koordinierten Biegens des Drahtelements mittels des Biegegesenks und Bewegens des Paars von Klemmen.

Wie bereits angedeutet, kann hierbei dieses Verfahren ferner ein selektives Anordnen einer ersten Gesenkhälfte aus einer Mehrzahl von ersten Gesenkhälften oder eines Biegegesenks aus einer Mehrzahl von Biegegesenken in einer Betriebsposition zwischen dem Paar von Klemmen vor dem Schritt des Greifens des Drahtelements oder dem Schritt des Biegens umfassen, wodurch die oben bereits diskutierte erhöhte Flexibilität der erfindungsgemäßen Maschine und des erfindungsgemäßen Verfahrens erzielt wird.

Wie ebenfalls bereits angedeutet, können die Schenkel des vorgebogenen Drahtelements in eine gleiche Richtung weisen, sodass das Drahtelement eine "U"-Form aufweist, oder die Schenkel des vorgebogenen Drahtelements können in eine entgegengesetzte Richtung weisen, sodass das Drahtelement eine "Z"-Form aufweist.

Weitere Merkmale und Vorteile der vorliegenden Erfindung werden aus der nachfolgenden Beschreibung einer Ausführungsform davon deutlich, wenn diese gemeinsam mit den beiliegenden Figuren betrachtet wird. Diese zeigen im Einzelnen:
- Fig. 1: eine Ausführungsform einer erfindungsgemäßen Maschine in einer schrägen Draufsicht in einem ersten Zustand;
- Fig. 2: die Maschine aus Figur 1 in einem zweiten Zustand; und
- Fig. 3: die Maschine aus den Figuren 1 und 2 im Zustand aus Figur 2 in einer Vorderansicht.

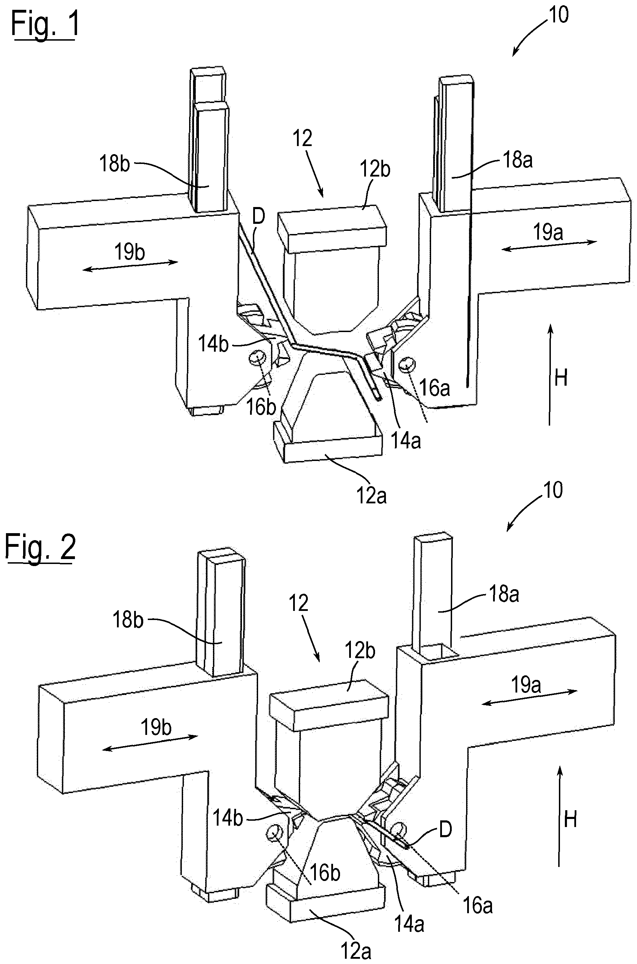

In der Figur 1 ist eine erfindungsgemäße Maschine zum Herstellen von gebogenen Drahtelementen in einer schrägen Draufsicht gezeigt und ganz allgemein mit dem Bezugszeichen 10 bezeichnet. Wie in Figur 1 zu erkennen ist, ist von einer nicht dargestellten Zufuhrvorrichtung bereits ein ebenes vorgebogenes Drahtelement D an die Maschine 10 zugeführt worden, das zwei sich in einer Ebene erstreckende und in eine entgegengesetzte Richtung weisende Schenkel sowie einen zwischen den Schenkeln vorgesehenen Zwischenabschnitt umfasst. Das Drahtelement D wird in dem in Figur 1 gezeigten Zustand noch extern von der Maschine 10 gehalten, beispielsweise an seinem in Figur 1 hinteren Schenkel.

Die Maschine 10 umfasst nun ein Biegegesenk 12 mit einer ersten, in Figur 1 unten vorgesehenen Gesenkhälfte 12a sowie einer zweiten, in Figur 1 oben vorgesehenen Gesenkhälfte 12b. In dem in Figur 1 gezeigten Zustand sind die beiden Gesenkhälften 12a und 12b des Biegegesenks 12 noch voneinander beabstandet, sodass das Zuführen des Drahts D in den Bereich zwischen den beiden Gesenkhälften 12a und 12b möglich gewesen ist.

Zu beiden Seiten des Biegegesenks 12 befinden sich nun zwei Klemmen 14a und 14b, die in Figur 1 ebenfalls noch in einem Freigabezustand sind, in welchem ihre jeweiligen Klemmbacken noch aufgespreizt sind.

Ferner ist in Figur 1 zu erkennen, dass die beiden Klemmen 14a und 14b um jeweilige Schwenkachsen 16a und 16b durch geeignete, nicht dargestellte Aktuatoren angetrieben schwenkbar gelagert sind, wobei die Schwenkachsen 16a und 16b im Wesentlichen in der Ebene des zugeführten Drahtelements D verlaufen. Weiterhin sind die beiden Klemmen 14a und 14b mitsamt ihrer Halterungen über jeweilige Linearbewegungseinheiten 18a und 18b entlang einer Höhenrichtung H verlagerbar, die senkrecht auf der Ebene des Drahtelements D steht, und durch entsprechende Einrichtungen, wie durch die Doppelpfeile 19a und 19b angedeutet, ferner in der Drahtebene horizontal verlagerbar, d.h. in Richtung auf das Gesenk zu oder von diesem weg.

Um nun das Drahtelement D in eine gewünschte Form zu biegen, d.h. ihm zwischen seinen beiden Schenkeln im Bereich seines mittleren Abschnitts einen aus der beiden Ebene der beiden Schenkel herausgebogenen Scheitel zu verleihen, wird es zunächst einmal an beiden Schenkeln jeweils durch eine der beiden Klemmen 14a und 14b gegriffen, die zu diesem Zweck ihre jeweiligen Klemmbacken schließen, bis das Drahtelement D mit einer ausreichenden Klemmkraft eingeklemmt ist.

Anschließend werden die beiden Gesenkhälften 12a und 12b des Biegegesenks 12 aufeinander zubewegt, beispielsweise indem die zweite Gesenkhälfte 12b auf die erste Gesenkhälfte 12a abgesenkt wird. Während auf diese Weise durch das Biegegesenk 12 der Scheitel in das Drahtelement D hineingebogen wird, kann ferner durch ein Schwenken der beiden Klemmen 14a und 14b um ihre jeweiligen Schwenkachsen 16a bzw. 16b und/oder durch eine lineare Verlagerung der Klemmen 14a und 14b durch ihre jeweiligen Linearverlagerungseinheiten 18a bzw. 18b eine zu dem Biegevorgang koordinierte rotatorische und/oder translatorische Bewegung durchgeführt werden. Gleichzeitig werden die Klemmen 14 und 14b mitsamt ihren Halterungen und somit ihren Schwenkachsen 16a bzw. 16b gemäß den Doppelpfeilen 19a und 19b horizontal derart bewegt, dass keine unerwünschte Verformung des zu formenden Drahtelements D erfolgt.

Der hierdurch erreichte Zustand der Maschine 10 ist in Figur 2 gezeigt, in der zum einen die beiden Gesenkhälften 12a und 12b aufeinander zubewegt worden sind, um das Drahtelement D zu biegen, und in dem andererseits eine rotatorische Bewegung der beiden Klemmen 14a und 14b um ihre jeweiligen Schwenkachsen 16a und 16b durchgeführt worden ist.

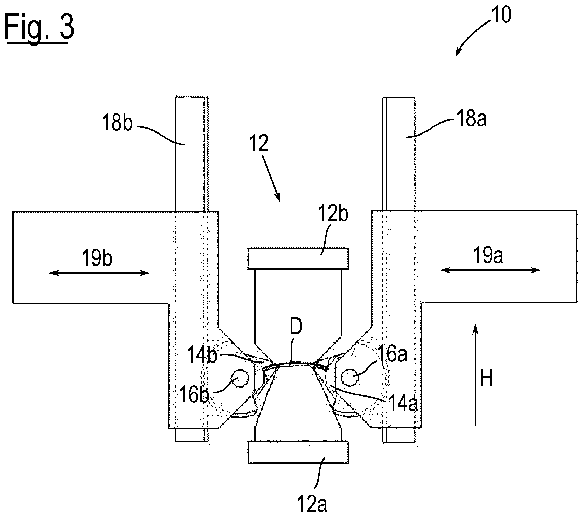

Derselbe Zustand der Maschine 10 wie in Figur 2 ist in Figur 3 in einer anderen Ansicht erneut gezeigt, nämlich in einer Vorderansicht der Maschine 10, wobei die Blickrichtung parallel zu der Ebene des Drahtelements D und damit auch parallel zu den beiden Schwenkachsen 16a und 16b verläuft. Hier ist besonders gut zu erkennen, dass einerseits durch das Gesenk 12 ein Biegen eines Scheitels aus der Ebene des Drahtelements D heraus erzielt worden ist und andererseits durch das Klemmen des Drahts D und Schwenken der beiden Klemmen 14a und 14b um ihre jeweiligen Schwenkachsen 16a und 16b die gewünschte geometrische Form des nunmehr fertig hergestellten Drahtbauteils mit großer Präzision erzielt worden ist.

Es bleibt an dieser Stelle lediglich noch nachzutragen, dass das Gesenk 12 oder wenigstens eine der beiden Gesenkhälften 12a und 12b austauschbar sein kann, um unterschiedliche Scheitelformen in die Drahtelemente D zu biegen. Beispielsweise kann ein Magazin von unterschiedlichen Gesenken 12 vorgesehen sein, die sich in Figur 3 in die Zeichnungsebene hinein hintereinander erstrecken. Alternativ kann lediglich die untere Gesenkhälfte 12a auf einer Trommel in einer Mehrzahl angeordnet sein, wobei durch eine Rotation der Trommel jeweils eine der unteren Gesenkhälften 12a in eine geeignete Betriebsposition rotiert werden kann, wo sie mit der an ihrer Betriebsposition verbleibenden oberen Gesenkhälfte 12b zusammenwirken kann.

## Patentansprüche

1. Maschine (10) zum Herstellen von gebogenen Drahtbauteilen, umfassend:
- eine Zufuhrvorrichtung zum Zuführen von ebenen vorgebogenen Drahtelementen (D) mit zwei sich in einer Ebene erstreckenden Schenkeln und einem zwischen den Schenkeln vorgesehenen Zwischenabschnitt;
- ein Biegegesenk (12), welches dazu ausgebildet und eingerichtet ist, den Zwischenabschnitt der Drahtelemente (D) wenigstens abschnittsweise aus der Ebene ihrer beiden Schenkel heraus zu biegen;
- ein Paar von beiderseits des Biegegesenks (12) angeordneter Klemmen (14a, 14b), welche dazu eingerichtet sind, die Drahtelemente (D) zu greifen, und ferner in koordinierter Weise translatorisch und/oder rotatorisch bewegbar sind; und
- eine Steuereinheit, welche mit dem Biegegesenk (12) und dem Paar von Klemmen (14a, 14b) betriebsmäßig gekoppelt und dazu eingerichtet ist, das Biegegesenk (12) und das Paar von Klemmen (14a, 14b) zu einem koordinierten Biegen und Bewegen anzusteuern,
**dadurch gekennzeichnet, dass**
die Klemmen (14a, 14b) um Schwenkachsen (16a, 16b) schwenkbar gelagert sind, welche im Wesentlichen in der Ebene der zugeführten und gegriffenen Drahtelemente (D) verlaufen, und die Klemmen (14a, 14b) jeweils von der Steuereinheit zum Ausführen einer Schwenkbewegung ansteuerbar sind.

2. Maschine (10) nach Anspruch 1, wobei die Klemmen (14a, 14b) des Paares von Klemmen relativ zueinander innerhalb der Ebene der zugeführten und gegriffenen Drahtelemente (D) translatorisch verlagerbar gehaltert sind, insbesondere in einer Richtung auf das Biegegesenk (12) oder von ihm weg, und/oder wobei die Klemmen (14a, 14b) des Paares von Klemmen in koordinierter Weise unter einem Winkel bezüglich der Ebene der zugeführten und gegriffenen Drahtelemente (D) translatorisch verlagerbar gehaltert sind, vorzugsweise unter einem rechten Winkel.

3. Maschine (10) nach einem der vorhergehenden Ansprüche, wobei eine erste Gesenkhälfte (12a) des Biegegesenks (12) in einer Mehrzahl vorliegt, von welcher Mehrzahl jeweils eine erste Gesenkhälfte (12a) selektiv an eine Betriebsposition zwischen das Paar von Klemmen (14a, 14b) bewegbar ist, während die zweite Gesenkhälfte (12b) an ihrer Betriebsposition verbleibt.

4. Maschine (10) nach Anspruch 3, wobei die Mehrzahl von ersten Gesenkhälften (12a) auf einer Trommel angeordnet sind, welche derart rotierbar ist, dass jeweils eine erste Gesenkhälfte (12a) an die Betriebsposition überführbar ist.

5. Maschine (10) nach einem der Ansprüche 1 und 2, wobei eine Mehrzahl von Biegegesenken (12) vorgesehen ist, welche selektiv translatorisch an eine Betriebsposition zwischen das Paar von Klemmen (14a, 14b) verlagerbar sind.

6. Maschine (10) nach Anspruch 5, wobei ein Magazin von Biegegesenken (12) vorgesehen ist, welches die Mehrzahl von Gesenken (12) in einer Weise angeordnet aufweist, dass ein Übergang zwischen den einzelnen Gesenken (12) durch eine translatorische Verlagerung des Magazins beispielsweise in der Ebene der zugeführten und gegriffenen Drahtelemente (D) erfolgt.

7. Maschine (10) nach einem der vorhergehenden Ansprüche, wobei der Steuereinheit eine Speichereinheit zugeordnet ist, in welcher Betriebsparameter zum Herstellen von Drahtbauteilen (D) unterschiedlicher Geometrie hinterlegt sind.

8. Maschine (10) nach einem der vorhergehenden Ansprüche, wobei die Bewegung des Biegegesenks (12) und/oder der Klemmen (14a, 14b) durch wenigstens einen von der Steuereinheit angesteuerten Linearaktuator hervorgerufen wird.

9. Verfahren zum Herstellen von gebogenen Drahtbauteilen (D) mittels einer Maschine (10) nach einem der vorhergehenden Ansprüche, umfassend die Schritte:
- Zuführen eines ebenen vorgebogenen Drahtelements (D) mit zwei sich in einer Ebene erstreckenden Schenkeln und einem zwischen den Schenkeln vorgesehenen Zwischenabschnitt;
- Greifen des Drahtelements (D) mittels der beiden Klemmen (14a, 14b); und
- koordiniertes Biegen des Drahtelements (D) mittels des Biegegesenks (12) und Bewegen des Paars von Klemmen (14a, 14b).

10. Verfahren nach Anspruch 9, ferner umfassend ein selektives Anordnen einer ersten Gesenkhälfte (12a) aus einer Mehrzahl von ersten Gesenkhälften (12a) oder eines Biegegesenks (12) aus einer Mehrzahl von Biegegesenken (12) in einer Betriebsposition zwischen dem Paar von Klemmen (14a, 14b) vor dem Schritt des Greifens des Drahtelements (D) oder dem Schritt des Biegens.

11. Verfahren nach Anspruch 9 oder 10, wobei die Schenkel des vorgebogenen Drahtelements (D) in eine gleiche Richtung weisen, so dass das Drahtelement eine "U"-Form aufweist, oder wobei die Schenkel des vorgebogenen Drahtelements (D) in eine entgegengesetzte Richtung weisen, so dass das Drahtelement eine "Z"-Form aufweist.

## Claims

1. Machine (10) for producing bent wire components, comprising:
- a feeding device for feeding flat, pre-bent wire elements (D) having two legs extending in one plane and an intermediate portion provided between the legs;
- a bending die (12) which is designed and set up to bend the intermediate portion of the wire elements (D), at least in portions, out of the plane of the two legs of said wire elements;
- a pair of clamps (14a, 14b) arranged one on either side of the bending die (12), which clamps are set up to grip the wire elements (D) and can also be translationally and/or rotationally moved in a coordinated manner; and
- a control unit which is operatively coupled to the bending die (12) and the pair of clamps (14a, 14b) and is set up to control the bending die (12) and the pair of clamps (14a, 14b) such that they bend and move in a coordinated manner,
**characterised in that**
the clamps (14a, 14b) are mounted so as to be pivotable about pivot shafts (16a, 16b), which extend substantially in the plane of the fed and gripped wire elements (D), and the clamps (14a, 14b) can each be controlled by the control unit so as to execute a pivoting movement.

2. Machine (10) according to claim 1, wherein the clamps (14a, 14b) of the pair of clamps are mounted so as to be translationally displaceable relative to one another within the plane of the fed and gripped wire elements (D), in particular in a direction towards the bending die (12) or away therefrom, and/or wherein the clamps (14a, 14b) of the pair of clamps are mounted so as to be translationally displaceable in a coordinated manner at an angle with respect to the plane of the fed and gripped wire elements (D), preferably at a right angle.

3. Machine (10) according to either of the preceding claims, wherein a first die half (12a) of the bending die (12) is one of a plurality, from which plurality a first die half (12a) can be selectively moved to an operating position between the pair of clamps (14a, 14b) in each case, while the second die half (12b) remains in its operating position.

4. Machine (10) according to claim 3, wherein the plurality of first die halves (12a) are arranged on a drum which is rotatable such that a first die half (12a) can be transferred to the operating position in each case.

5. Machine (10) according to either claim 1 or claim 2, wherein a plurality of bending dies (12) are provided, which can be selectively translationally displaced to an operating position between the pair of clamps (14a, 14b).

6. Machine (10) according to claim 5, wherein a magazine of bending dies (12) is provided, which has the plurality of dies (12) arranged in a way that a transition between the individual dies (12) takes place by means of a translational displacement of the magazine, for example in the plane of the fed and gripped wire elements (D).

7. Machine (10) according to any of the preceding claims, wherein the control unit is assigned a memory unit in which operating parameters for producing wire components (D) of different geometries are stored.

8. Machine (10) according to any of the preceding claims, wherein the movement of the bending die (12) and/or of the clamps (14a, 14b) is brought about by at least one linear actuator controlled by the control unit.

9. Method for producing bent wire components (D) by means of a machine (10) according to any of the preceding claims, comprising the steps of:
- feeding a flat, pre-bent wire element (D) having two legs extending in one plane and an intermediate portion provided between the legs;
- gripping the wire element (D) by means of the two clamps (14a, 14b); and
- bending the wire element (D) in a coordinated manner by means of the bending die (12) and moving the pair of clamps (14a, 14b).

10. Method according to claim 9, further comprising selectively arranging a first die half (12a) from a plurality of first die halves (12a) or a bending die (12) from a plurality of bending dies (12) in an operating position between the pair of clamps (14a, 14b) before carrying out the step of gripping the wire element (D) or the bending step.

11. Method according to either claim 9 or claim 10, wherein the legs of the pre-bent wire element (D) point in the same direction such that the wire element has a "U" shape, or wherein the legs of the pre-bent wire element (D) point in an opposite direction such that the wire element has a "Z" shape.

## Revendications

1. Machine (10) de production d'éléments en fil métallique cintrés, comprenant :
- un dispositif d'alimentation pour alimenter des éléments en fil métallique (D) pré-cintrés plats comprenant deux branches s'étendant dans un plan et une section intermédiaire prévue entre lesdites branches ;
- une matrice de cintrage (12) réalisée et conçue pour cintrer la section intermédiaire des éléments en fil métallique (D) au moins par sections en dehors du plan de leurs deux branches ;
- une paire de pinces (14a, 14b) agencées de part et d'autre de la matrice de cintrage (12), qui sont conçues pour saisir les éléments en fil métallique (D) et peuvent en outre être déplacées en translation et/ou en rotation de manière coordonnée ; et
- une unité de commande, qui est couplée fonctionnellement avec la matrice de cintrage (12) et avec la paire de pinces (14a, 14b), et est conçue pour commander la matrice de cintrage (12) et la paire de pinces (14a, 14b) afin de fournir un cintrage et un déplacement coordonnés,
**caractérisée en ce que**
les pinces (14a, 14b) sont montées de manière pivotante autour d'axes de pivotement (16a, 16b) qui s'étendent essentiellement dans le plan des éléments en fil métallique (D) alimentés et saisis, et les pinces (14a, 14b) peuvent être respectivement commandées par l'unité de commande afin de mettre en œuvre un mouvement de pivotement.

2. Machine (10) selon la revendication 1, dans laquelle les pinces (14a, 14b) de la paire de pinces sont maintenues de manière déplaçable en translation l'une par rapport à l'autre dans le plan des éléments en fil métallique (D) alimentés et saisis, en particulier dans une direction allant vers la matrice de cintrage (12) ou partant de celle-ci, et/ou dans laquelle les pinces (14a, 14b) de la paire de pinces sont maintenues de manière déplaçable en translation de manière coordonnée selon un angle par rapport au plan des éléments en fil métallique (D) alimentés et saisis, de manière préférée selon un angle droit.

3. Machine (10) selon l'une quelconque des revendications précédentes, dans laquelle une première moitié de matrice (12a) de la matrice de cintrage (12) fait partie d'une pluralité parmi laquelle pluralité respectivement une première moitié de matrice (12a) peut être déplacée de manière sélective au niveau d'une position de fonctionnement entre la paire de pinces (14a, 14b) tandis que la deuxième moitié de matrice (12b) demeure au niveau de sa position de fonctionnement.

4. Machine (10) selon la revendication 3, dans laquelle la pluralité de premières moitiés de matrice (12a) sont agencées sur un tambour qui peut tourner de telle manière que respectivement une première moitié de matrice (12a) peut être transférée au niveau de la position de fonctionnement.

5. Machine (10) selon l'une quelconque des revendications 1 et 2, dans laquelle une pluralité de matrices de cintrage (12) sont prévues, qui peuvent être déplacées en translation de manière sélective au niveau d'une position de fonctionnement entre la paire de pinces (14a, 14b).

6. Machine (10) selon la revendication 5, dans laquelle un magasin de matrices de cintrage (12) est prévu, qui présente la pluralité de matrices (12) agencées de telle manière qu'un transfert entre les matrices (12) individuelles intervient grâce à un déplacement en translation du magasin, par exemple dans le plan des éléments en fil métallique (D) alimentés et saisis.

7. Machine (10) selon l'une quelconque des revendications précédentes, dans laquelle l'unité de commande est associée à une unité de mémoire au sein de laquelle sont stockés des paramètres de fonctionnement permettant la production d'éléments en fil métallique (D) de géométries différentes.

8. Machine (10) selon l'une quelconque des revendications précédentes, dans laquelle le mouvement de la matrice de cintrage (12) et/ou des pinces (14a, 14b) est provoqué grâce à au moins un actionneur linéaire commandé par l'unité de commande.

9. Procédé de production d'éléments en fil métallique (D) cintrés au moyen d'une machine (10) selon l'une quelconque des revendications précédentes, comprenant les étapes consistant à :
- alimenter un élément en fil métallique (D) pré-cintré plat comprenant deux branches s'étendant dans un plan et une section intermédiaire prévue entre lesdites branches ;
- saisir l'élément en fil métallique (D) au moyen des deux pinces (14a, 14b) ; et
- cintrer de manière coordonnée l'élément en fil métallique (D) au moyen de la matrice de cintrage (12) et déplacer la paire de pinces (14a, 14b).

10. Procédé selon la revendication 9, comprenant en outre l'agencement sélectif d'une première moitié de matrice (12a) issue d'une pluralité de premières moitiés de matrice (12a) ou une matrice de cintrage (12) issue d'une pluralité de matrices de cintrage (12) dans une position de fonctionnement entre la paire de pinces (14a, 14b) avant l'étape de saisie de l'élément en fil métallique (D) ou l'étape de cintrage.

11. Procédé selon la revendication 9 ou 10, dans lequel les branches de l'élément en fil métallique (D) pré-cintré pointent dans la même direction de sorte que l'élément en fil métallique présente une forme en « U », ou dans lequel les branches de l'élément en fil métallique (D) pré-cintré pointent dans une direction opposée de sorte que l'élément en fil métallique présente une forme en « Z ».
